Europäisches Patentamt

European Patent Office

Office européen des brevets

(19)

(11) Veröffentlichungsnummer: **0 310 852**
**A1**

## EUROPÄISCHE PATENTANMELDUNG

(21) Anmeldenummer: **88115345.6**

(22) Anmeldetag: **19.09.88**

(51) Int. Cl.⁴: **H02H 9/04**

(30) Priorität: **09.10.87 CH 3963/87**

(43) Veröffentlichungstag der Anmeldung:
**12.04.89 Patentblatt 89/15**

(84) Benannte Vertragsstaaten:
**CH DE FR LI**

(71) Anmelder: **BBC Brown Boveri AG**
**Haselstrasse**
**CH-5401 Baden(CH)**

(72) Erfinder: **Köppl, Georg**
**Waldmatt 14**
**CH-5242 Birr(CH)**

(54) **Hochspannungsnetz mit einer Vorrichtung zur Begrenzung von Einschaltüberspannungen.**

(57) Das Hochspannungsnetz enthält mindestens eine Hochspannungsquelle (4), eine Hochspannungsleitung (1), einen zwischen Hochspannungsquelle (4) und Hochspannungsleitung (1) liegenden Leitungsschalter (5) und eine zwischen schalterseitigem Ende der Hochspannungsleitung (1) und Erde liegende Ueberspannungsschutzvorrichtung.

In diesem Hochspannungsnetz sollen Ueberspannungen, die beim Einschalten des Leitungsschalters (5) an der Hochspannungsleitung (1) oder anderen Netzteilen (2) auftreten können, in einfacher und sicherer Weise auf zulässige Werte begrenzt werden.

Dies wird dadurch erreicht, dass die Ueberspannungsschutzvorrichtung mindestens zwei miteinander in Serie geschaltete Ueberspannungsableiter (7, 8) enthält, von denen ein mit Erde verbundener Ueberspannungsableiter (8) beim Zuschalten der Hochspannungsleitung (1) vor dem Leitungsschalter (5) über einen Ueberbrückungsschalter (11) kurzschliessbar ist.

Fig.1

EP 0 310 852 A1

# HOCHSPANNUNGSNETZ MIT EINER VORRICHTUNG ZUR BEGRENZUNG VON EINSCHALTÜBERSPANNUN-GEN

Bei der Erfindung wird ausgegangen von einem Hochspannungsnetz gemäss dem ersten Teil von Patentanspruch 1.

Ein derartiges Hochspannungsnetz ist beispielsweise bekannt aus dem Aufsatz von G. Köppl et al.: "Schaltüberspannungen in Hoch- und Höchstspannungsnetzen" Brown Boveri Mitt. 1970, 57 (12) 554-561, insbesondere Seite 560. Bei diesem Hochspannungsnetz lassen sich Ueberspannungen, die beim Einschalten eines zwischen einem einspeisenden Netzteil und einer Hochspannungsleitung befindlichen Leitungsschalters auftreten können, durch einen zwischen Hochspannungsleitung und Erde angeordneten Funkenstreckenableiter begrenzen. Um hierbei die Ueberspannung unter dem Zweifachen des Scheitelwertes der Nennspannung des Hochspannungsnetzes zu halten, sind aufwendige Spezialkonstruktionen der Funkenstreckenableiter erforderlich.

Die Erfindung, wie sie in Patentanspruch 1 angegeben ist, löst die Aufgabe, in einem Hochspannungsnetz Einschaltüberspannungen in einfacher Weise auf Werte zu reduzieren, die für die Isolationen von Hochspannungsleitung und weiteren Netzteilen harmlos sind.

Das erfindungsgemässe Hochspannungsnetz zeichnet sich dadurch aus, dass Ueberspannungen, die beim Einschalten der Hochspannungsleitung auftreten können, in einfacher und sicherer Weise auf vergleichsweise niedrige Ueberspannungswerte begrenzt werden. Die hierzu vorgesehene Begrenzungsvorrichtung ist lediglich während des Einschaltens beansprucht und kann daher in kostengünstiger Weise an die beim Einschalten auftretenden Anforderungen angepasst werden. Zugleich ist diese Begrenzungsvorrichtung Teil einer Vorrichtung, welche die bei atmosphärischen Störungen oder weiteren Schalthandlungen auftretenden Ueberspannungen unterhalb eines vergleichsweise höheren Ueberspannungswertes hält.

Die Erfindung wird nachfolgend anhand eines in der Zeichnung beschriebenen Ausführungsbeispiels näher erläutert. Hierbei zeigt:

Fig. 1 ein Prinzipschaltbild eines erfindungsgemäss ausgebildeten Hochspannungsnetzes mit einer zur Begrenzung von Einschaltüberspannungen auf einer Hochspannungsleitung vorgesehenen Serienschaltung zweier MO-Ueberspannungsableiter, von denen einer während des Einschaltens durch einen Ueberbrückungsschalter kurzgeschlossen wird, und

Fig. 2 Strom-Spannungs-Kennlinien der Serienschaltung der beiden MO-Ueberspannungsableiter I und des durch den Ueberbrückungsschalter kurzschliessbaren MO-Ueberspannungsableiters II des erfindungsgemässen Hochspannungsnetzes gemäss Fig. 1.

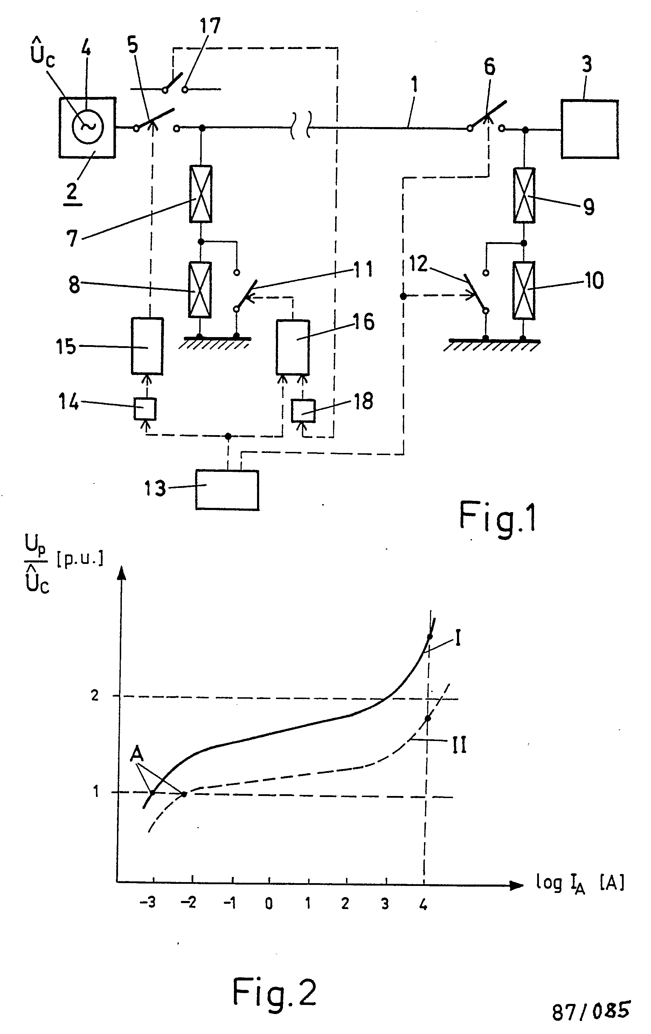

Das in Fig. 1 einphasig dargestellte Hochspannungsnetz weist zwei über eine Hochspannungsleitung 1 miteinander verbindbare Netzteile 2, 3 auf, von denen mindestens eines, beispielsweise das Netzteil 2 mindestens eine Hochspannungsquelle 4 umfasst. Die Netzteile 2, 3 sind jeweils über Leitungsschalter 5 bzw. 6 mit dem linken bzw. rechten Ende der Hochspannungsleitung 1 verbindbar. Das linke Ende der Hochspannungsleitung 1 ist über eine Serienschaltung zweier Ueberspannungsableiter 7, 8 auf der Basis Metalloxyd, wie etwa Zinkoxyd, mit Erde verbunden. Entsprechend ist das rechte Ende der Hochspannungsleitung 1 über eine Serienschaltung zweier Ueberspannungsableiter 9, 10 auf der Basis Metalloxyd mit Erde verbunden. Parallel zu den mit Erde verbundenen Ueberspannungsableitern 8 bzw. 10 der beiden Serienschaltungen liegen jeweils Ueberbrückungsschalter 11, 12.

13 bezeichnet ein auf die Leitungsschalter 5, 6 und die Ueberbrückungsschalter 11, 12 wirkendes Steuergerät. Da die Wirkverbindungen zwischen diesem Steuergerät und den beiden Schaltern 5, 11 bzw. den beiden Schaltern 6, 12 im wesentlichen gleich sind, sind aus Gründen der Uebersichtlichkeit nur die Wirkverbindungen zwischen dem Steuergerät 13 und dem Leitungsschalter 5 bzw. dem Ueberbrückungsschalter 11 genauer dargestellt. In der Wirkverbindung zum Leitungsschalter 5 ist ein Zeitverzögerungsglied 14 vorgesehen, welches mit einer Zeitverzögerung von typischerweise 10 ms gegenüber einer Befehlsabgabe des Steuergerätes 13 auf einen Antrieb 15 des Leitungsschalters 5 wirkt. Hingegen wirkt das Steuergerät 13 ohne Verzögerung auf einen Antrieb 16 des Ueberbrückungsschalters 11.

17 bezeichnet Hilfskontakte des Leistungsschalters 5. Diese Hilfskontakte wirken nach dem Schliessen des Leitungsschalters über ein Zeitverzögerungsglied 18 mit einer Zeitverzögerung von typischerweise 20 - 30 ms auf den Antrieb 16 des Ueberbrückungsschalters 11.

Die Wirkungsweise eines solchen Hochspannungsnetzes wird nachfolgend anhand von Fig. 2 näher erläutert. In dieser Figur bezeichnet $U_p$ das Schutzniveau bei Schaltspannung, d.h. die höchste Schaltspannung, die über einem Mo-Ueberspannungsableiter bei einem bestimmten Ableitstrom $I_A$ auftreten kann. Das Schutzniveau $U_p$ ist in Einheiten angegeben, welche auf den Scheitelwert $\hat{U}_c$ der

maximalen, dauernd zulässigen Betriebsspannung der in Serie geschalteten Ueberspannungsableiter bezogen sind (p.u.).

Bei geöffnetem und bei geschlossenem Leitungsschalter 5 ist die Hochspannungsleitung 1 durch die beiden in Serie geschalteten Ueberspannungsableiter 7 und 8 vor Ueberspannungen geschützt. Diese Serienschaltung weist die in Fig. 2 durchgezogen dargestellte Strom-Spannungs-Kennlinie I auf. Das Schutzniveau einer solchen Ueberspannungsbegrenzungsvorrichtung beträgt bei einem noch zulässigen Ableitstrom von beispielsweise 1 kA ca. 2,0 p.u. Bei Nennbetrieb, d.h. bei Anliegen einer Betriebsspannung mit einem Scheitelwert $\hat{U}_c$ führt die aus der Serienschaltung der beiden Ueberspannungsableiter 7, 8 bestehende Schutzvorrichtung einen im Milliamperebereich liegenden Strom. Daher erwärmt sich diese Schutzvorrichtung trotz ständiger Einsatzbereitschaft lediglich in zulässiger Weise. Die Schutzvorrichtung ist geeignet, die Hochspannungsleitung 1 und den Leitungsschalter 5 vor vergleichsweise hohen Ueberspannungen wirksam zu schützen.

Soll nun die Hochspannungsleitung 1 an das Netzteil 2 angeschaltet werden, so gibt das Steuergerät 13 zunächst einen Einschaltbefehl ab. Dieser Befehl bewirkt ein unverzögertes Schliessen des Ueberbrückungsschalters 11 und somit ein Kurzschliessen des erdseitigen Ueberspannungsableiters 8. Die Hochspannungsleitung ist ab diesem Zeitpunkt lediglich durch den Ueberspannungsableiter 7 vor Ueberspannungen geschützt. Mit einer durch das Zeitverzögerungsglied bestimmten Verzögerung wirkt sodann der Einschaltbefehl auch auf den Antrieb 15 und wird der Leitungsschalter 5 geschlossen. Hierbei können je nach Zustand des Netzteils 2 und der Hochspannungsleitung 1 Einschaltüberspannungen auftreten, welche oberhalb eines vom Netzbetreiber vorgegebenen und beispielsweise unter 2 p.u. betragenden Ueberspannungswertes liegen. Derartige Einschaltüberspannungen werden jedoch durch den Ueberspannungsableiter 7 auf die von dem Netzbetreiber vorgeschriebenen Ueberspannungswerte begrenzt. Wie aus Fig. 2 ersichtlich ist, weist der Ueberspannungsableiter 7 eine der Strom-Spannungs-Kennlinie I entsprechende, 70 %, gegebenenfalls aber auch 60 - 80 %, deren Schutzniveau $U_p$ erreichende (gestrichelt dargestellte) Strom-Spannungs-Kennlinie II auf. Daher begrenzt der Ueberspannungsableiter 7 z.B. bei einem zulässigen Ableitstrom von 1 kA Einschaltüberspannungen auf Werte < 1,5 p.u.

20 - 30 ms nach Schliessen des Leitungsschalters 5 sind die die Einschaltüberspannungen hervorrufenden Ausgleichsvorgänge abgeklungen und wird der Ueberbrückungsschalter 11 wieder geöffnet. Das Oeffnen kann - wie in Fig. 1 dargestellt ist -

- über das von den Hilfskontakten 17 des Leitungsschalters 5 gesteuerte und mit einer Verzögerung von 20 - 30 ms auf den Antrieb 16 einwirkende Zeitverzögerungsglied 18 erreicht werden. Durch das Oeffnen des Ueberbrückungsschalters wird nun wieder die Serienschaltung der beiden Ueberspannungsableiter 7 und 8 an die zu schützende Hochspannungsleitung 1 angeschlossen. Hierdurch wird der bei Nennspannung mit einem Scheitelwert $\hat{U}_c$ beim Ueberspannungsableiter 7 bei ca. 10 mA liegende Arbeitspunkt A wieder in den Milliamperebereich zurückverlegt und werden somit ein unerwünscht hoher Leckstrom und damit eine unzulässig hohe Erwärmung der Ueberspannungsschutzvorrichtung vermieden.

Der Ueberbrückungsschalter 11 braucht lediglich auf 30 %, je nach Dimensionierung des Ueberspannungsableiters 7 aber gegebenenfalls auf 20 - 40 %, der Nennspannung des Hochspannungsnetzes bemessen zu sein. Der Ueberbrückungsschalter 11 kann daher kostengünstig und platzsparend ausgebildet sein. Die Anforderung an sein Ein- und Ausschaltvermögen sind gering, da er stromlos ausgeschaltet wird und da beim Ausschalten am Ende des Ausgleichsvorganges im ungünstigsten Fall ein Ableiterstrom von höchstens einigen 100 A unterbrochen werden muss.

Der Ueberspannungsableiter 7 muss thermisch stärker dimensioniert werden als der Ueberspannungsableiter 8. Eine solche Dimensionierung ist von der Länge der Hochspannungsleitung 1 abhängig und kann in Analogie zur Dimensionierung von Einschaltwiderständen aufgrund von Netzberechnungen ermittelt werden.

Bei einem mehrphasigen Hochspannungsnetz ist für jede Phase je eine Vorrichtung zur Begrenzung von Ueberspannungen erforderlich.

## Ansprüche

1. Hochspannungsnetz mit mindestens einer Hochspannungsquelle (4), einer Hochspannungsleitung (1) einem zwischen Hochspannungsquelle (4) und Hochspannungsleitung (1) liegenden Leitungsschalter (5) und einer zwischen schalterseitigem Ende der Hochspannungsleitung (1) und Erde liegenden und mindestens einen Ueberspannungsableiter (7, 8) enthaltenden Vorrichtung zur Begrenzung von Ueberspannungen, die beim Einschalten des Leitungsschalters auftreten, dadurch gekennzeichnet, dass die Vorrichtung zur Begrenzung der Einschaltüberspannungen mindestens zwei miteinander in Serie geschaltete Ueberspannungsableiter (7, 8) enthält, von denen ein erster (7) mit der Hochspannungsleitung (1) und ein zweiter (8) mit Erde verbunden ist und der mit Erde verbundene zweite Ueberspannungsableiter (8) parallel liegt zu mindestens einem beim Einschalten vor dem Leitungsschalter (5) schliessenden Ueberbrückungsschalter (11).

2. Hochspannungsnetz nach Anspruch 1, dadurch gekennzeichnet, dass die mindestens zwei Ueberspannungsableiter (7, 8) als funkenstreckenlose Ueberspannungsableiter mit vergleichsweise flacher erster Strom-Spannungs-Kennlinie (I, II) ausgebildet sind, und dass der erste Ueberspannungsableiter (7) für höhere thermische Belastungen dimensioniert ist als der zweite (8) und eine etwa 60 - 80 % des Schutzniveaus ($U_p$) der ersten (I) erreichende zweite Strom-Spannungs-Kennlinie (II) aufweist.

3. Hochspannungsnetz nach einem der Ansprüche 1 oder 2, dadurch gekennzeichnet, dass der Ueberbrückungsschalter (11) mit einer Verzögerung nach dem Schliessen des Leitungsschalters geöffnet wird, welche bestimmt ist durch die Abklingdauer der beim Einschalten auftretenden Ueberspannungen.

4. Hochspannungsnetz nach Anspruch 3, dadurch gekennzeichnet, dass der Befehl zum Oeffnen des Ueberbrückungsschalters (11) gebildet wird von beim Einschalten des Leitungsschalters (5) betätigten Hilfskontakten (17).

Fig.1

Fig.2

87/085

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-1 538 501 (GEC) <br> * Seite 19, Zeile 5 - Seite 21, Zeile 14; Figuren 1,2; Seite 17, Zeilen 5-14 * <br> --- | 1 | H 02 H 9/04 |
| A | DE-A-3 444 317 (BBC) <br> * Figur 1; Zusammenfassung * <br> --- | 1 | |
| A | DE-A-3 038 561 (LICENTIA) <br> * Ansprüche 1,8; Figur 2 * <br> ----- | 1 | |

RECHERCHIERTE
SACHGEBIETE (Int. Cl.4)

H 02 H
H 01 H

Der vorliegende Recherchenbericht wurde für alle Patentansprüche erstellt

| Recherchenort | Abschlußdatum der Recherche | Prüfer |
|---|---|---|
| DEN HAAG | 19-12-1988 | KOLBE W.H. |